# EUROPEAN PATENT APPLICATION

(11) **EP 2 030 662 A1**
(43) Date of publication of application: **04.03.2009**
(21) Application number: 07114056.0
(22) Date of filing: 09.08.2007
(51) Int. Cl.: B01D 3/32, F25J 3/04

(54) **Support device for single distillation column within the insulated enclosure**

(71) Applicant: L'AIR LIQUIDE, Société Anonyme pour l'Etude et l'Exploitation des Procédés Georges Claude, 75007 Paris (FR)
(72) Inventor: Batrol, Raymond, 89110 Les Ormes (FR); Davoust, Claude, 94140 Joinville-le-Pont (FR); Servant, Christophe, 38110 La Tour du Pin (FR); Rousselot, Christian, 77340 Pontault Combault (FR)
(74) Representative: Mercey, Fiona Susan

(57) **Abstract**

A support device for a single distillation column within an insulated enclosure is provided. The support device includes at least one fixed support (103) and at least one non-fixed supports (104). The non-fixed support device allows only one effective degree of local motion, in the direction of the first longitudinal axis.

## Description

There are many devices or assemblies that incorporate an element, generally an active element, whose verticality is critical. In certain fields, such as the preparation of gases and in precision measuring devices, the article in question, possibly along with other, less critical devices, may be contained in a closed envelope. Often these enclosures are hermetically sealed. Therefore, it is important that the verticality be ensured by a precision mounting of the internal device within the enclosing envelope. There is a need within the industry for a support device that ensures the verticality of the internal unit.

The process in the present application is directed to a support device that satisfies the need in society in general for a support device that ensures the verticality of the internal unit.

In one aspect of the present invention a support device for an operative unit mounted in a surrounding envelope mounted to a base is provided. This support system includes a fixed support, which rigidly connects the operative unit and the surrounding envelope. This rigid connection results in zero effective degrees of local motion between the operative unit and the surrounding envelope. This support device also includes at least one non-fixed supports that connects the operative unit and the surrounding envelope in a slidable way. This sliding connection results in one effective degree of local motion between the operative unit and the surrounding envelope.

According to one aspect of the invention, there is provided a support device for an operative unit mounted in a surrounding envelope mounted to a base comprising:
- a surrounding envelope mounted to a base, said surrounding envelope comprising a first longitudinal axis,
- an operative unit mounted in said surrounding envelope, said operative unit comprising a second longitudinal axis,
- at least one fixed support , wherein said fixed support rigidly connects said operative unit and said surrounding envelope, resulting in zero effective degrees of local motion between said operative unit and said surrounding envelope, and
- at least one non-fixed support , wherein said at least one non-fixed support connects said operative unit and said surrounding envelope slidably along said first longitudinal axis, resulting in at least one, preferably only one, effective degree of local motion between said operative unit and said surrounding envelope, thereby allowing for thermal expansion of said operative unit.

According to additional emblodiments:
- said first longitudinal axis and said second longitudinal axis are essentially parallel.
- said first longitudinal axis and said second longitudinal axis are superimposed.
- the support device comprises:
   - at least two non-fixed supports, wherein said non-fixed supports join said operative unit and said surrounding envelope slidably along said first longitudinal axis.
- said non-fixed support comprises a male mounting member attached to said operative unit and a female mounting member attached to said supporting envelope.
- said female mounting member comprises a slot , preferably elliptical, therein allowing said male mounting member said one effective degree of local motion.
- said one effective degree of local motion is along said first longitudinal axis.
- said fixed support (103) comprises:
   - at least two symmetric trapezoidal members attached to said surrounding envelope, and
   - a mounting plate attached to said trapezoidal member,
   - wherein said mounting plate is attached to said operative unit.
- said operative unit is a single distillation column.
- said single distillation column comprises a column and a condenser.
- said column comprises a distal end and a proximal end , and wherein said condenser is located at said distal end.
- said fixed support is positioned between said column and said condenser.

As used herein, the term "degree of motion" is defined as any one of the number of independent directions into which the space configuration of a mechanical system may change. An object confined to a line in space can be displaced only along the line, and therefore has one degree of motion. An object confined to a surface can be displaced in two perpendicular directions and accordingly has two degrees of motion. An object free in physical space has three degrees of motion corresponding to three possible perpendicular displacements.

As used herein, the term "effective degree of local motion" is defined as the degree of motion which is experienced by , and which consequently affects, only a limited part of the overall system involved. Hence, while the distal end of an object may be rigidly connected to a inflexible and firm structure and have zero effective degrees of local motion with respect to this structure, the proximal end of this same object may experience one, or more, degrees of local motion as the result of, for example, thermal growth in the entire object.

The invention may be understood by reference to the following description taken in conjunction with the accompanying drawings, and in which:
Figure 1 is a schematic side view of one embodiment of the current invention.
Figure 2a and 2b are embodiments of the non-fixed supports of the current invention.
Figure 3 is a schematic top view of one embodiment of the fixed supports of the current invention.
Figure 4a and 4b are respectively a side view and a top view of another embodiment of the fixed supports of the current invention.
Figure 5 is a schematic top view of another embodiment of the current invention.

Illustrative embodiments are described below. While the process in the present application is susceptible to various modifications and alternative forms, specific embodiments thereof have been shown by way of example in the drawings and are herein described in detail.

The following examples and embodiments are directed toward, but not limited to, a single column distillation system of an air separation unit.

According to one embodiment, an operative unit, in this particular example the column, is supported inside the surrounding envelope, in this particular example the cold box. The support is attached to the top, or near the top, of the distillation column, and this support is then attached to the inside of the cold box. According to EP-A-0913653, the air separation unit is assembled and fabricated horizontally by pulling the column into the horizontally disposed cold box. It is important to ensure that the column and the cold box are highly parallel. This allows the verticality of the cold box to be measured and adjusted during installation, and thereby ensures the distillation column itself will also be vertical. While the air separation unit itself is operating, the column should be perfectly parallel, for optimum performance. Thus, the designers can only allow a single degree of freedom for displacements due to thermal growth, etc. This freedom is along the vertical axis.

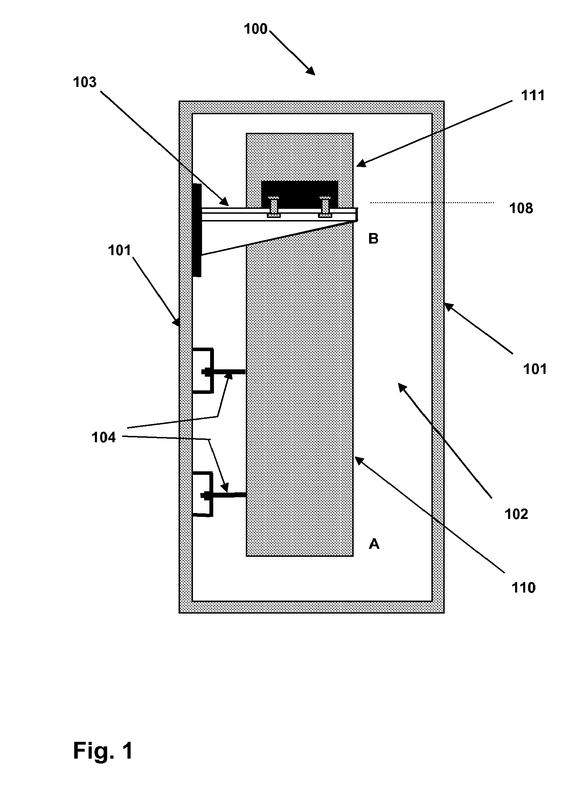

Now turning to Fig. 1, an assembled cold box **100** in accordance with embodiments of the present invention is illustrated. The assembled cold box **100** contains a support device comprising at least one fixed support **103** and at least one non-fixed support **104.** For physically smaller units, a single fixed support **103** and a single non-fixed support **104** may be necessary.

These supports, **103** and **104,** are securely attached to distillation column **102.** Distillation column **102** may comprise a column **110** and a condenser **111.** Distillation column **102** may have a proximal end **A** and a distal end **B.** The fixed support **103** is additionally rigidly connected to the surrounding envelope **101.** The non-fixed support **104** is slidably attached to the surrounding envelope **101.** The surrounding envelope **101** may have a first longitudinal axis. The distillation column **102** may have a second longitudinal axis.

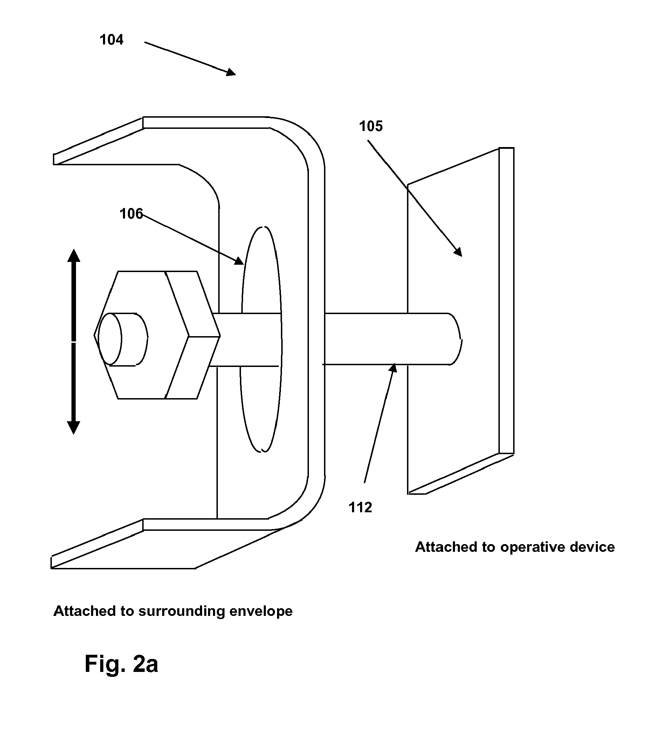

Now turning to Fig. 2a, one embodiment of the non-fixed support **104** is illustrated. The non-fixed support **104** comprises a male mounting member **105** and a female mounting member **106.** In one embodiment, the male mounting member **105** comprises a bolt **112,** or other similar attachment means. The male mounting member **105** is rigidly connected to the operative unit. The female mounting member **106** is rigidly connected to the surrounding envelope. The slot shaped hole in female mounting member **106,** has substantially the same width as the diameter of the bolt **112** but is longer than that diameter. This allows the male mounting member **105** one effective degree of local motion, in direction of the first longitudinal axis.

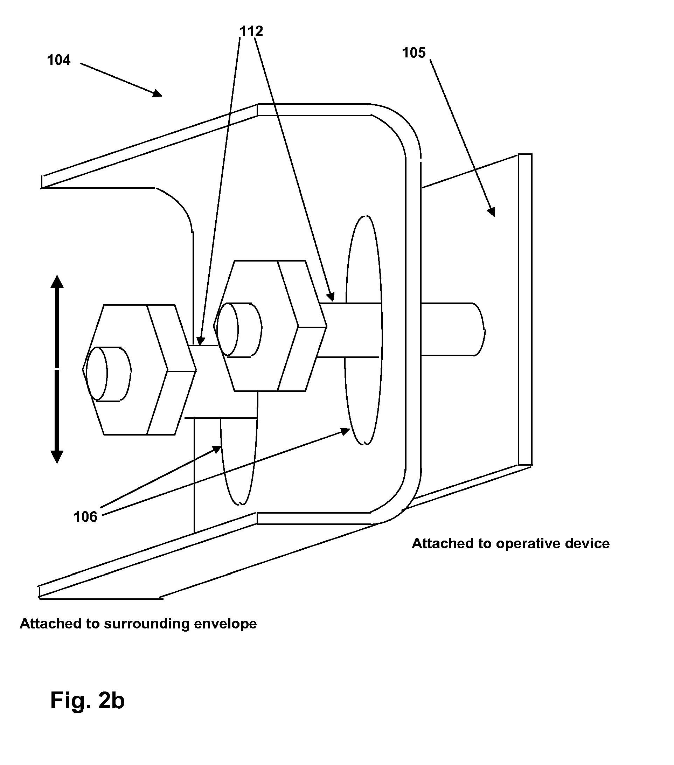

Turning to Figure 2b, an alternate embodiment of the non-fixed support **104** is shown. The non-fixed support **104** comprises a male mounting member **105** and a female mounting member **106.** In one embodiment, the male mounting member **105** comprises at least two bolts **112,** or other similar attachment means. The male mounting member is rigidly connected to the operative unit. The female mounting member **106** is rigidly connected to the surrounding envelope. The slot shaped hole in female mounting member **106,** has substantially the same width as the diameter of the bolt **112** but is longer than that diameter. This allows the male mounting member **105** one effective degree of local motion, in the direction of the first longitudinal axis.

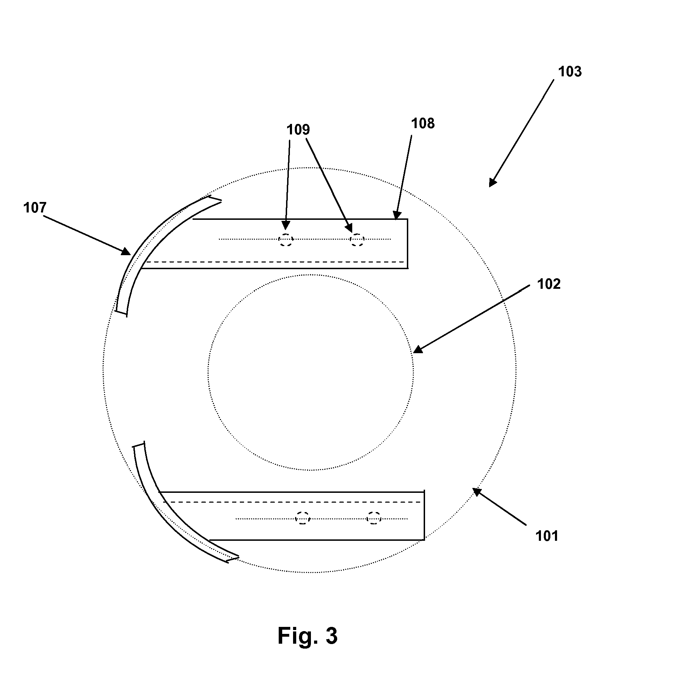

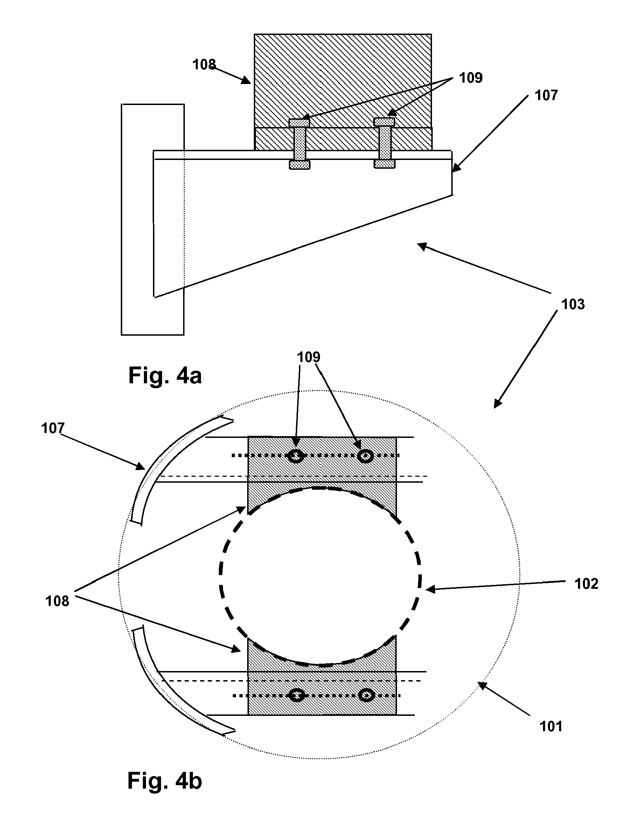

Now turning to Fig. 3, Fig. 4a, and Fig. 4b, one embodiment of the fixed support **103** is illustrated. The fixed support **103** comprises at least two members **107,** which are rigidly connected to the surrounding envelope **101.** Members **107** may be trapezoidal and/or symmetrical in shape. A mounting plate **108** is attached to the top of member **107.** Attachment means, such as bolts or rivets **109,** may be used to rigidly attach mounting plate **108** to the top of member **107.** Bolts **109** may be centered according to the location of the column **102.** The mounting plate **108** is also rigidly attached to the distal end B, or near the distal end, of the operative unit **102.**

In one embodiment, the operative unit **102** is a single distillation column that consists of at least a column **110** and a condenser **111.** Mounting plate **108** may be attached to the distal end of the distillation column **110,** the condenser is then mounted on the mounting plate. In one embodiment the fixed support **103** may be rigidly connected to the column **110** (a few centimeters under the top) and the condenser **111** may be mounted on top of the column **110.** The non-fixed supports **104** are located at the middle and the bottom of the column **110.** An insulation plate may be added between the supports **103, 104** and the distillation column **102** in order to reduce, or prevent, any heat from transferring through these supports. The weight of the operative unit **102** is supported mainly by the fixed support **103** at or near the distal end of the column **110.** The non-fixed supports **104** are primarily provided to ensure the verticality of the column **110,** once the column is positioned in a vertical orientation.

One or more of the non-fixed supports **104** may be used to support the weight of the operating unit **102** during transportation, and then unused to support the operating unit **102** during normal operation. The non-fixed support **104** that is located at, or near, the middle of the operating unit **102** may be the non-fixed support **104** that is only used during transportation, and remains unused during normal operation. The non-fixed support **104** that is located at, or near, the proximate end of the operating unit **102** may be the non-fixed support **104** that is used both during transportation and is also used during normal operation to ensure the verticality of the operating unit **102,** once the column is positioned in a vertical orientation.

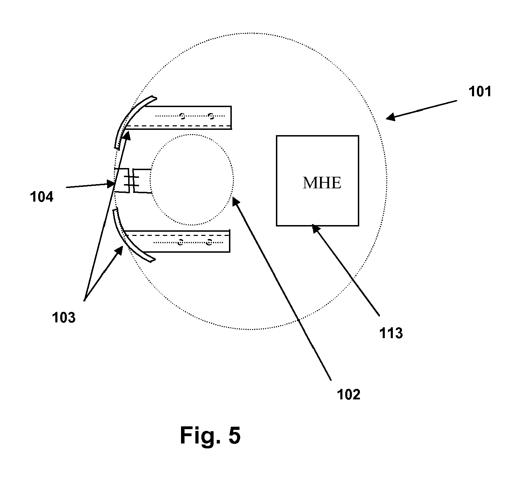

Turning to Fig. 5, another embodiment of the present invention is illustrated. The operative unit **102,** shown in relation to the fixed support **103** and non-fixed supports **104,** may be positioned in a non-concentric relationship with surrounding envelope **101,** in order to provide space within the surrounding envelope **101** for other necessary equipment such as a main heat exchanger **113,** or piping, etc (not shown). The surrounding envelope **101** and the distillation column **102** may be concentric, and hence first longitudinal axis and the second longitudinal axis may be superimposed. The surrounding envelope **101** and the distillation column **102** may be non-concentric, and hence the first longitudinal axis and the second longitudinal axis may be parallel, but not superimposed.

## Claims

1. A support device for an operative unit mounted in a surrounding envelope mounted to a base comprising:
• a surrounding envelope (101) mounted to a base, said surrounding envelope comprising a first longitudinal axis,
• an operative unit (102) mounted in said surrounding envelope, said operative unit comprising a second longitudinal axis,
• at least one fixed support (103), wherein said fixed support rigidly connects said operative unit and said surrounding envelope, resulting in zero effective degrees of local motion between said operative unit and said surrounding envelope, and
• at least one non-fixed support (104), wherein said at least one non-fixed support connects said operative unit and said surrounding envelope slidably along said first longitudinal axis, resulting in at least one, preferably only one, effective degree of local motion between said operative unit and said surrounding envelope, thereby allowing for thermal expansion of said operative unit.

2. The support device of claim 1, wherein said first longitudinal axis and said second longitudinal axis are essentially parallel.

3. The support device of claim 1, wherein said first longitudinal axis and said second longitudinal axis are superimposed.

4. The support device of any preceding claim comprising:
• at least two non-fixed supports (104), wherein said non-fixed supports join said operative unit and said surrounding envelope slidably along said first longitudinal axis.

5. The support device of any preceding claim, wherein said non-fixed support comprises a male mounting member (112) attached to said operative unit and a female mounting member attached to said supporting envelope.

6. The support device of claim 5, wherein said female mounting member (104) comprises an slot (106), preferably elliptical, therein allowing said male mounting member (112) said one effective degree of local motion.

7. The support device of claim 6, wherein said one effective degree of local motion is along said first longitudinal axis.

8. The support device of any preceding claim, wherein said fixed support (103) comprises:
• at least two symmetric trapezoidal members attached to said surrounding envelope, and
• a mounting plate attached to said trapezoidal member,
• wherein said mounting plate is attached to said operative unit (102).

9. The support device of any preceding claim, wherein said operative unit (102) is a single distillation column.

10. The support device of claim 9, wherein said single distillation column (102) comprises a column (110) and a condenser (111).

11. The support device of claim 10, wherein said column comprises a distal end (B) and a proximal end (A), and wherein said condenser (111) is located at said distal end.

12. The support device of claim 11, wherein said fixed support (103) is positioned between said column and said condenser (111).
